Europäisches Patentamt

**European Patent Office**

Office européen des brevets

(11) Veröffentlichungsnummer: **0 210 556**
**A2**

(12) # EUROPÄISCHE PATENTANMELDUNG

(21) Anmeldenummer: 86109889.5

(51) Int. Cl.⁴: **G 02 B 6/12**

(22) Anmeldetag: 18.07.86

(30) Priorität: 31.07.85 DE 3527433

(43) Veröffentlichungstag der Anmeldung:
04.02.87 Patentblatt 87/6

(84) Benannte Vertragsstaaten:
FR GB NL SE

(71) Anmelder: Schott Glaswerke
Hattenbergstrasse 10
D-6500 Mainz(DE)

(84) Benannte Vertragsstaaten:
FR NL SE

(71) Anmelder: Carl-Zeiss-Stiftung trading as SCHOTT
GLASWERKE
Hattenbergstrasse 10
D-6500 Mainz 1(DE)

(84) Benannte Vertragsstaaten:
GB

(72) Erfinder: Ross, Ludwig, Dr.
In der Veldenzer Weg 11
D-6509 Armsheim(DE)

(72) Erfinder: Lilienhof, Hans-J., Dr.
Gloganerstrasse 21
D-4670 Lünen-Horstmar(DE)

(74) Vertreter: Rasper, Joachim, Dr.
Bierstadter Höhe 22
D-6200 Wiesbaden(DE)

(54) **Modenunabhängiger integriert-optischer Lichtwellenstrahlteiler und Verfahren zu seiner Herstellung.**

(57) Herstellung modenunabhängiger, integriert-optischer Lichtwellenleiterstrahlteiler, wobei in einer, auf einem geeigneten Substratmaterial erzeugten, lichtwellenleitenden Schicht ein als Strahlenteiler wirkendes Paar von definierten Grenzflächen angeordnet ist, welches diese lichtwellenleitende Schicht unterbricht.

Aufgrund der durch die Grenzfläche entstehenden Brechzahldifferenz wird ein Teil des geführten Lichtes an der Grenzfläche reflektiert. Aus der Breite der Grenzfläche und ihrem Winkel zur Wellenleiternormalen wird das Teilungsverhältnis eingestellt. Hierbei läßt sich ein Arbeitspunkt finden, bei dem die Reflexions- und Transmissionskoeffizienten für beide Polarisationsarten TE und TM des geführten Lichtes gleich groß sind, so daß dieser Abzweiger polarisations- und modenunabhängig arbeitet. Des weiteren lassen sich auch Arbeitspunkte angeben, bei dem das Bauteil als Polarisator eingesetzt werden kann.

# Modenunabhängiger integriert-optischer Lichtwellenstrahlteiler und Verfahren zu seiner Herstellung

Die Erfindung betrifft eine integriert-optische Wellenleiterabzweigung.

Sowohl die optische Nachrichtentechnik als auch die optische Sensortechnik benötigen integriert-optische Drei-Tor Schaltungen. Ein optisches Drei-Tor ist dadurch gekennzeichnet, daß aus einem Lichtwellenleiter ein definierter Teil der geführten Lichtintensität gezielt ausgekoppelt wird.

Für optische Übertragungssysteme mit Glasfaser-Lichtwellenleiter sind die Abzweige eine wichtige Komponente. Sie dienen z.B. auf der Senderseite als Istwertgeber zur Regelung der Sendeleistung, in Datenbussystemen oder im Fernsehverteilnetzen zur räumlichen Verteilung des Signals. (Meyer, W.; Mikrowellenmagazin 1978, Seiten 153-158).

In der faseroptischen Sensorik finden optische Abzweiger z.B. zur Aufteilung der vom Wellenleiter geführten Lichtintensität für Modulatoren o.ä. eine Anwendung (Diese, E.; Realisierung eines Hydrophons, Dissertation Kiel 1984).

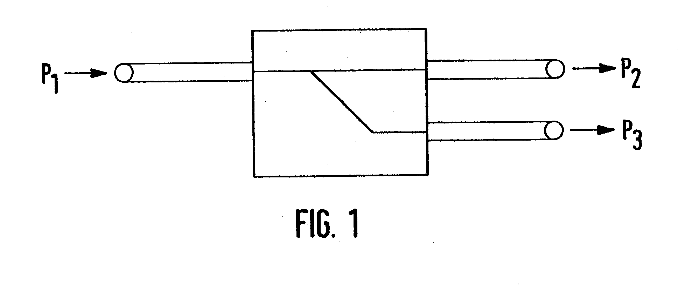

In Abb. 1 ist schematisch ein idealer Abzweiger skizziert. Die wichtigsten Kenngrößem sind dabei seine Einfügungsverluste $V = -10 \lg((P2+P3)/P1)$ und das Teilerverhältnis $T = P3/P2$ mit P1 als eingekoppelte und P2, P3 als ausgekoppelte Leistung. Dabei sind als die wichtigsten Eigenschaften eines idealen Abzweigers folgende Kriterien anzusehen:

- niedrige Einfügungsverluste
- modenunabhängige Verteilung
  reproduzierbare Herstellung
- niedrige Fertigungskosten
- kleine Baugröße

Bisher wurden zur Regulierung von Abzweigern verschiedene Techniken vorgeschlagen. Dabei besteht grundsätzlich die Möglichkeit über die Stirnfläche oder entlang der Oberfläche der Glasfasern Licht ein- oder auszukoppeln.

Bei der Stirnflächenkopplung können die zu koppelnden Wellenleiter entweder direkt Stoß auf Stoß nach dem Versatzprinzip (Witte, H.-H. et al; Siemens- Forsch.- und Entw. Ber. 8 (1979) Seiten 141-143) oder nach dem Gabelprinzip, in Planartechnik (Auracher, F.; Opt. Commun. 17 (1976) Seiten 129-132) oder in Fasertechnik (Kalmbach, U. et al; Nachr.techn.Z. 31 (1978) Seiten 423-425), hergestellt werden

Der Nachteil dieser Abzweiger besteht darin, daß die Koppelverluste, insbesondere bei Ankopplung von Gradientenfasern, hoch sind und das diese Bauelemente eine ausgeprägte Modenabhängigkeit zeigen.

Ein weiteres Abzweigeprinzip beruht auf der Anregung von Mantelmoden durch einen sich verengenden Taper. Hierzu wird eine Faser erhitzt und zu einer Einschnürung etwas ausgezogen. Durch das Zusammenbringen von zwei getaperten Fasern durch Verschmelzen oder Verkleben durchdringen die Mantelmoden im Koppelbereich beide Faserquerschnitte und die Lichtleistung verteilt sich auf beide Fasern (Kawasaki, B. et al; Appl. Opt. 16 (1977) Seite 1794).

Der Nachteil dieser Koppler liegt in ihrer recht komplizierten Herstellungsweise und ihrer starken Modenabhängigkeit, da die Umwandlung von geführten Moden in Mantelmoden stark modenabhängig ist (je nach der Querschnittsverengung des Tapers werden z.B. nur die hohen oder fast alle Mantelmoden umgewandelt).

Ein Abzweigeprinzip, das die recht aufwendige Herstellung der Faserkoppler nicht besitzt und integriert-optisch in Planartechnik hergestellt wurde, ist von Tangonan et. al. angegeben worden. (G.L. Tangonan, L.E. Gorre, D.L. Persechini "Planar multimode couplers for fiber optics", Optics Communications 27 (1978) Seiten 358-360).

Hierbei wird durch einen feldunterstützten Ionenaustausch in Glas eine Wellenleiterstruktur ähnlich einem unsymmetrischen Y hergestellt. Mittels des Verzweigungswinkels der beiden Wellenleiterarme wird das Teilungsverhältnis eingestellt. Das so realisierte optische Drei-Tor nutzt zwar die Vorteile der Planartechnik mit einer reproduzierbaren Herstellung und niedrigen Kosten zur Massenfertigung, hat aber auch die Nachteile der Modenselektivität der Faserkoppler. Denn in dem seitlichen Abzweiger werden vorwiegend nur die höheren der im Wellenleiter geführten Moden ausgekoppelt.

Der Erfindung liegt nun die Aufgabe zugrunde einen integriert-optischen Abzweiger herzustellen, der sowohl im vielwelligen als auch im einwelligen Wellenleitersystemen einsetzbar ist, der im vielwelligen Wellenleitersystem modenunabhängig arbeitet, einfach hergestellt werden kann und die beim Stand der Technik angeführten Nachteile nicht besitzt.

0210556

- 4 -

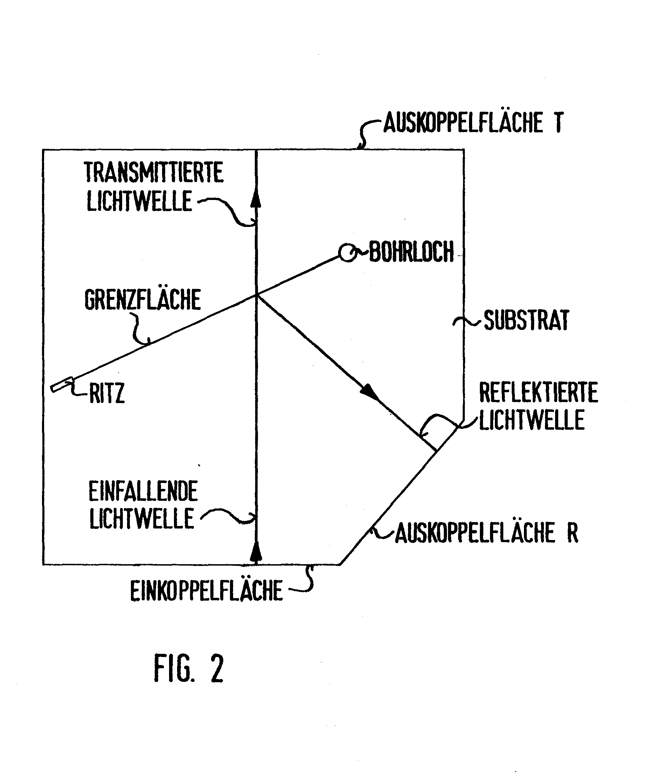

Diese Aufgabe wird erfindungsgemäß dadurch gelöst, daß quer zum Wellenleiter gezielt ein Paar von definierten Grenzflächen in die lichtwellenleitende Schicht, gegebenenfalls bis in das Substrat, gebracht wird. Die Struktur des Abzweigers ist in Abb. 2 angegeben. Quer zu einem Wellenleiter, hier als Beispiel ein planarer Wellenleiter, wird gezielt ein Sprung in das Substrat gebracht. Aufgrund der durch den Sprung entstandenen Grenzflächen Substrat-Spalt-Subtrat wird, beschrieben durch die Fresnel-Formeln der OPtik, ein Teil der geführten Lichtintensität des lichtes an diesen Grenzflächen reflektiert, der andere Teil wieder in den Wellenleiter eingekoppelt und weitergeführt. Der Anteil des reflektierten Lichtes ist dabei abhängig von der Brechzahldifferenz Substrat-Spalt und Spalt-Substrat und hängt weiter ab von dem Winkel des Sprunges zur Wellenleiternormalen. Der reflektierte Anteil wird dann wieder in den Wellenleiter eingekoppelt und weitergeführt.

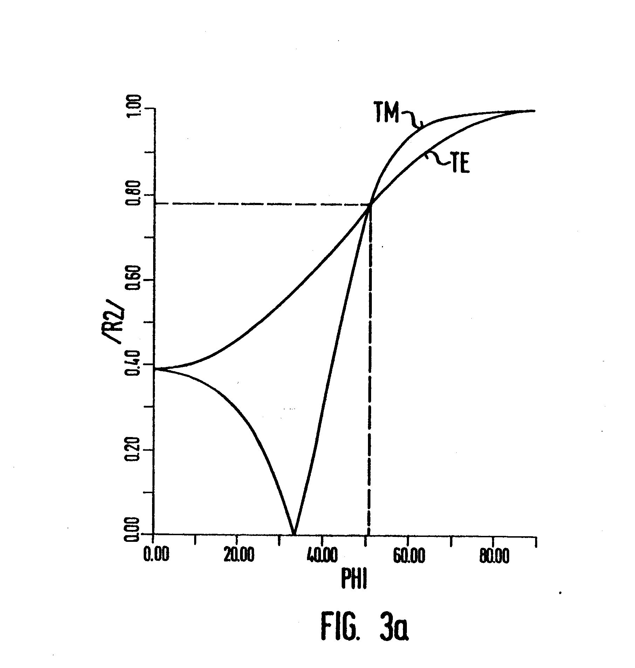

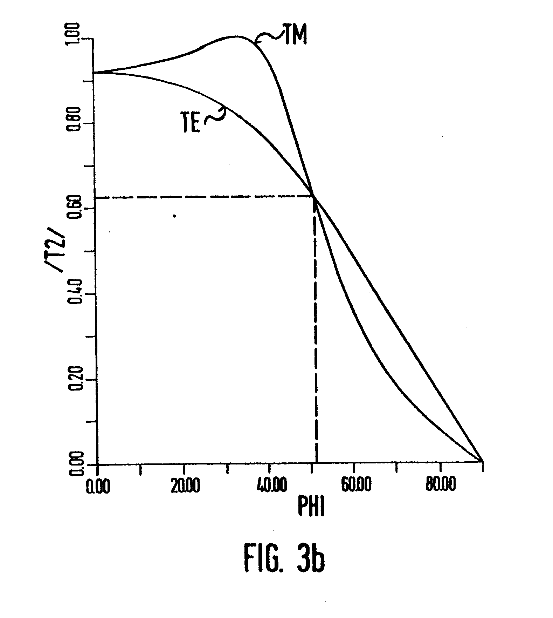

Die Wellenleiterstrahlteilung wird mathematisch durch die Fresnel-Formeln für zwei Grenzflächen beschreiben. Gleichung (1) beschreibt dabei das Verhalten des reflektierten Anteils, Gleichung (2) das des transmittierten. Um aus den Reflexions- bzw. den Transmissionsfaktoren die jeweiligen Intensitäten zu bestimmen, ist das jeweilige Betragsquadrat zu bilden. In Abb. 3 sind als Beispiel die Reflexions bzw. Transmissionskoeffizienten für einen Wellenleiter mit einem Brechwert von 1.51 und einem Brechwert des Gaps mit 1.00 bei einer Breite d von 0.205 µm ($\stackrel{\wedge}{=} \lambda/4$) für eine Wellenlänge von $\lambda = 0.82$ µm sowohl für die TE- als auch für die TM-Polarisation gerechnet.

$$(R) = \frac{(g_2 - g_1) \exp p_1 d_1 + (g_2 + g_1) \exp -p_1 d_1 \cdot \dfrac{g_1 - g_0}{g_1 + g_0}}{(g_2 + g_1) \exp p_1 d_1 + (g_2 + g_1) \exp -p_1 d_1 \cdot \dfrac{g_1 - g_0}{g_1 + g_0}} \qquad (G1.1)$$

$$(T) = \frac{2 g_2 \cdot \dfrac{2 g_1}{g_1 + g_0}}{(g_2 + g_1) \exp p_1 d_1 + (g_2 - g_1) \exp -p_1 d_1 \cdot \dfrac{g_1 - g_0}{g_1 + g_0}} \qquad (G1.2)$$

mit $p_1 = j \dfrac{2\pi}{\lambda} n_i \cos \varphi$   $i = 1,2,3$

und $g_i = \dfrac{n_i \cos \varphi}{\mu_i}$ für TE-Wellen mit $\mu_i = 1$

$g_i = \dfrac{u_i \cos \varphi}{n_i}$   für TM-Wellen mit $\mu_i = 1$.

mit n1 und n2 als Brechnungsindex des Wellenleiters, $n_3$ als Brechnungsindex der Grenzschicht der Breite d, $\mu$ der Permeabilität
$\lambda$ der Wellenlänge des einfallenden Lichtes und
$\varphi$ als den Einfallswinkel.

## Anwendungsbeispiele

1. Anwendungsbeispiel

Zur Realisierung eines moden- und polarisationunabhängigen Strahlteilers sind folgende Schritte notwendig:

In der Substratplatte BK7 (optiches Glas Fa. Schott, Mainz; 40mm Durchmesser, 1mm dick, beidseitig poliert) wird durch Ionenaustausch im $CsNO_3$ -Bad bei einer Temperatur von 450°C und unter anlegen eines elektrischen Feldes von 50 V/mm und während einer Zeit von 2 min ein planarer Wellenleiter mit einer Tiefe von 5 um hergestellt. Dieser Wellenleiter ist bei einer Wellenlänge von 780 nm einwellig.

Nach der Herstellung des Wellenleiters wird das Substrat auf eine Trägerplatte aufgeklebt.

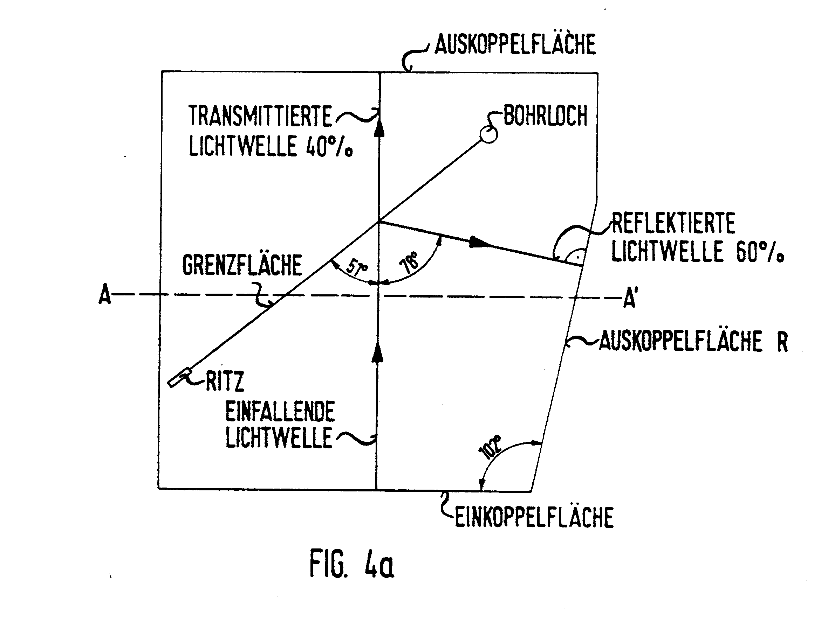

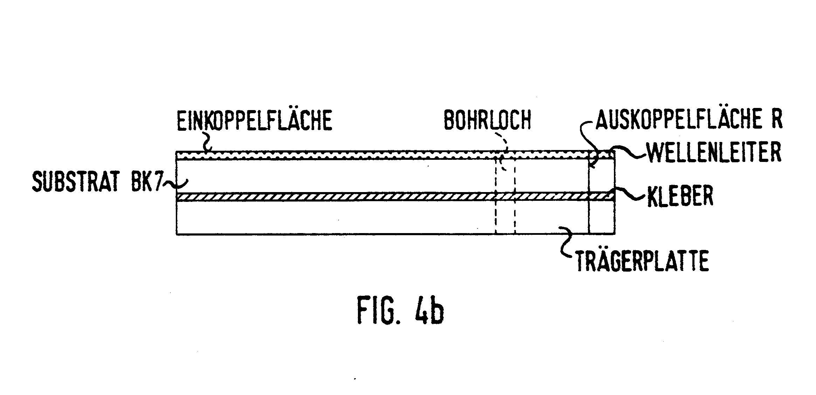

Die Eingangs- und die gegenüberliegende Ausgangsstirnfläche werden planparallel zueinander geschnitten und poliert. Im Winkel von 102° zur Eintrittsstirnfläche wird eine weitere Austrittstirnfläche geschnitten und poliert (Abb. 4).

Entsprechend der Abb. 2 wird in die Substratplatte mindestens bis auf die Trägerplatte ein Loch mit einem Durchmesser von 2mm gebohrt.

Das Ritzwerkzeug wird in Bezug auf die Einkoppelfläche mit einem Winkel von 39° ausgerichtet. Dadurch wird die zu erzeugende Grenzfläche mit einem Winkel von 51° zum einfallenden Lichtstrahl festgelegt, so daß die Intensität der durch die Grenzfläche transmitierte Lichtanteil für die TE- als auch für die TM-Polarisation identisch sind (Abb. 2). Der Ritz wird so an den Rand des Substrates gelegt, daß die Ritzrichtung durch die Mitte des gebohrten Loches geht (Abb. 4).

Zwischen dem Ritz und dem Mittelpunkt des gebohrten Loches wird ein dünner Platindraht gespannt und mittels einer elektrischen Spannung erhitzt. Dabei reißt das Substrat ausgehend von dem Ritz bis zu dem gebohrten Loch und bildet die gewünschte Grenzfläche durch den Wellenleiter.

Das so hergestellte Bauteil teilt eine eingekoppelte Lichtwelle polarisations- und modenunabhängige in zwei Teilwellen im vorausbestimmten Verhältnis von 6 : 4 von reflektierten zu transmittierten Strahl.

2. Anwendungsbeispiel

Zur Realisierung eines vielwelligen moden- und polarisationsunabhängigen Streifenwellenleiters mit Strahlteiler sind folgende Schritte notwendig:

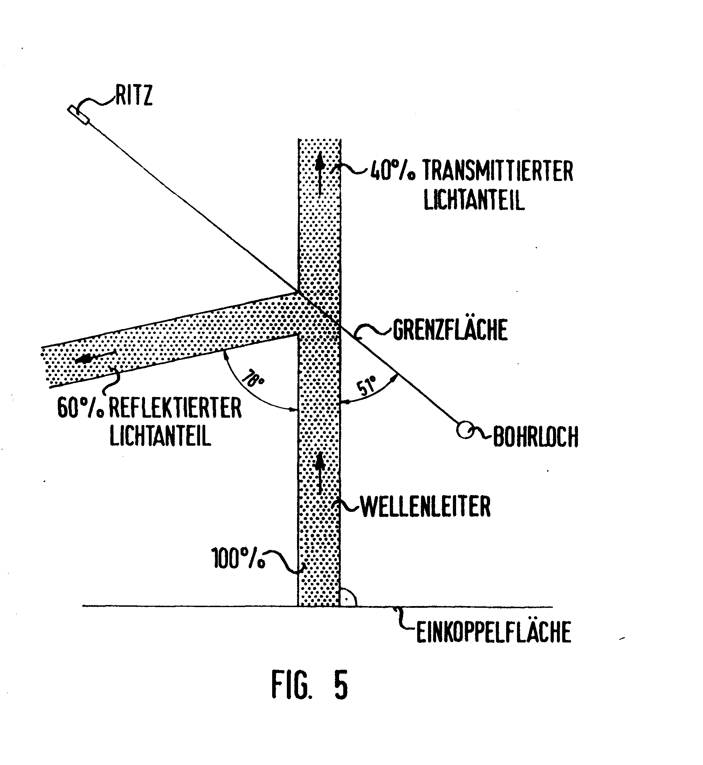

Auf eine Substratplatte aus BK7 mit 40 mm Durchmesser und 1mm Dicke wird eine Metallmaske mittels des bekannten photolitographischen Verfahrens aufgebracht, so daß Streifenwellenleiter erzeugt werden (Abb. 5). Die Herstellung des Streifenwellenleiters erfolgt wie im Anwendungsbeispiel 1 beschrieben, jedoch mit einer Austauschzeit von 10 min, so daß ein Wellenleiter mit einer Tiefe von 25 μm entsteht.

Die Herstellung des Spaltes erfolgt in gleicher Weise wie im Anwendungsbeispiel 1, wobei der Spalt so gelegt wird, daß er durch den Schnittpunkt der Mittellinien der sich treffenden Wellenleiter geht (Abb. 5).

Das so hergestellte Bauteil teilt das eingekoppelte Licht moden- und polarisationsunabhängig im Verhältnis 6 : 4 von reflektierten zu transmittierten Strahl.

Die einfache Herstellung dieses Abzweigers in den unterschiedlichsten Materialien (z.B. Glas, LiNbO$_3$, GaAs) erlaubt die Realisierung zahlreicher neuartiger Ausbildungen der Erfindung, die in den Ansprüchen 1 bis 19 beschrieben sind und in den Ausführungsbeispielen näher erläutert wurden. Die Ausführungsbeispiele der Erfindung sind in den Zeichnungen dargestellt die im folgenden näher beschrieben werden.

Abb. 1 zeigt in schematischer Darstellung einen idealen Abzweiger in der Form eines Richtkopplers.

Abb. 2 zeigt die Aufsicht auf den Wellenleiterstrahlteiler. Ein Teil der einfallenden Lichtwelle wird an der Grenzfläche reflektiert und kann an der Auskoppelfläche R wieder in einen Lichtwellenleiter eingekoppelt werden. Die transmittierte Michtwelle kann entsprechend an der Auskoppelfläche T in eine Glasfaser eingekoppelt werden.

Abb. 3 zeigt die Reflexions- (Abb. 3a) bzw. die Transmissionskoeffizienten (Abb. 3a) nach Gleichung (1) und (2) für eine Wellenlänge von $\lambda$ = 0.82 µm und einen Brechwert des Wellenleiters von $n_1$ = $n_2$ = 1.51 und einen Brechwert der Grenzschicht von 1.00 bei einer Spaltbreite von d = 0.205 µm ($= \lambda/4$).

Abb 4a zeigt einen Strahlteiler in Aufsicht. Die einfallende Lichtwelle wird zu 60% an der Grenzfläche reflektiert und kann an der Auskoppelfläche R wieder in einen Lichtwellenleiter eingekoppelt werden. Der transmittierte Anteil beträgt 40% und wird an der Fläche T ausgekoppelt.

Abb. 4b zeigt den Strahlteiler im Schnitt A-A'. Das Substrat ist mit Kleber auf eine Trägerplatte aufgekittet.

- 9 -

0210556

Abb. 5 zeigt das Schema eines Streifenwellenleiterstrahlteilers in Aufsicht. Die Grenzfläche ist dabei so gelegt, daß sie durch den Schnittpunkt der sich treffenden Wellenleiter geht.

0210556

Patentansprüche:

1. Modenunabhängiger integriert-optischer Lichtwellenstrahlteiler, dadurch gekennzeichnet, daß in einer, auf einem geeigneten Substratmaterial erzeugten, lichtwellenleitenden Schicht ein als Strahlenteiler wirkendes Paar von definierten Grenzflächen angeordnet ist, welches diese lichtwellenleitende Schicht unterbricht.

2. Lichtwellenstrahlteiler nach Anspruch 1, dadurch gekennzeichnet, daß dieses Paar von definierten Grenzflächen in Gestalt eines Risses oder Sprunges in dieser lichtwellenleitenden Schicht vorliegt.

3. Lichtwellenstrahlteiler nach Anspruch 1 oder 2, dadurch gekennzeichnet, daß dieses Paar von Grenzflächen in einer planaren lichtwellenleitenden Schicht liegt.

4. Lichtwellenstrahlteiler nach einem der Ansprüche 1 bis 3, dadurch gekennzeichnet, daß das Ende dieses Risses oder Sprunges durch ein in das Substrat eingebrachtes Loch begrenzt ist.

5. Lichtwellenstrahlteiler nach einem der Ansprüche 1 bis 4, dadurch gekennzeichnet, daß diese lichtwellenleitende Schicht aus einer Folge von lichtwellenleitenden Zonen, die durch nicht-lichtwellenleitende Zonen voneinander getrennt sind, besteht.

6. Lichtwellenstrahlteiler nach einem der Ansprüche 1 bis 5, dadurch gekennzeichnet, daß dieses durch diesen Riss oder Sprung gebildete Paar von Grenzflächen in den Knotenpunkt von mehreren zusammenlaufenden lichtwellenleitenden Zonen gelegt ist.

7. Lichtwellenstrahlteiler nach einem der Ansprüche 1 bis 6, dadurch gekennzeichnet, daß das Teilerverhältnis (eingekoppelte Leistung zur ausgekoppelten Leistung) mit Hilfe des Winkels zwischen diesem Riss oder Sprung und der Wellenleiter-Normalen, sowie der Spaltbreite dieses Risses oder Sprunges eingestellt ist.

0210556

8. Lichtwellenstrahlteiler nach einem der Ansprüche 1 bis 7, dadurch gekennzeichnet, daß zwischen diesen Grenzflächen ein Material mit einem Brechwert zwischen 1.0 und dem Brechwert des Substrates liegt.

9. Lichtwellenstrahlteiler nach einem der Ansprüche 1 bis 8, dadurch gekennzeichnet, daß der Wellenleiter durch thermischen oder feldunterstützten Ionenaustausch erzeugt worden ist.

10. Lichtwellenstrahlteiler nach einem der Ansprüche 1 bis 8, dadurch gekennzeichnet, daß der Wellenleiter durch Eindiffusion von Metallen hergestellt worden ist.

11. Lichtwellenstrahlteiler nach einem der Ansprüche 1 bis 8, dadurch gekennzeichnet, daß der Wellenleiter durch Ionenimplantation hergestellt worden ist.

12. Lichtwellenstrahlteiler nach einem der Ansprüche 1 bis 8, dadurch gekennzeichnet, daß der Wellenleiter durch Aufbringen von organischen oder organometallischen oder metallorganischen Schichten hergestellt worden ist.

13. Lichtwellenstrahlteiler nach einem der Ansprüche 1 bis 12, dadurch gekennzeichnet, daß das Substratmaterial Glas ist.

14. Lichtwellenstrahlteiler nach einem der Ansprüche 1 bis 12, dadurch gekennzeichnet, daß das Substratmaterial ein kristallines Material wie LiNbO3, LiTaO3, GaAs, InP und/oder Mischverbindungen daraus ist.

15. Lichtwellenstrahlteiler nach einem der Ansprüche 1 bis 12, dadurch gekennzeichnet, daß das Substratmaterial ein transparenter Kunststoff ist.

- 12 -

0210556

16. Verfahren zur Herstellung eines Lichtwellenstrahlteilers gemäß den Ansprüchen 1 bis 15, dadurch gekennzeichnet, daß dieses Paar von definierten Grenzflächen in Gestalt eines Risses oder Sprunges durch Anlegen einer kontrollierten, thermisch induzierten Spannung nach vorherigem mechanischem Anritzen erzeugt wird.

17. Verfahren nach Anspruch 16, dadurch gekennzeichnet, daß das Substrat mit der lichtwellenleitenden Schicht in eine definierte Lage einjustiert und mit einem Ritzwerkzeug am Rande unter einem vorgegebenen Winkel angeritzt wird, worauf durch thermisch induzierte Spannung ein Riss oder Sprung, ausgehend von diesem Ritz, in einer gezielten Richtung bis zu einem vorgegebenen Punkt erzeugt wird.

18. Verfahren nach Anspruch 17, dadurch gekennzeichnet, daß das Substrat vor dem Anritzen auf ein geeignetes Trägermaterial gekittet wird.

19. Verwendung eines Lichtwellenstrahlteilers gemäß einem der Ansprüche 1 bis 15 als polarisationsunabhängiger Strahlteiler, wobei der Einfallswinkel, gegeben durch die Grenzflächen und die Ausbreitungsrichtung der geführten Lichtwelle, so gewählt worden ist, daß die Intensitäten der reflektierten TM- und TE-Modenanteile gleich sind.

20. Verwendung eines Lichtwellenleiterstrahlteilers gemäß einem der Ansprüche 1 bis 15 als integriert-optischer Polarisator, wobei der Einfallswinkel dem Brewsterwinkel entspricht.

1/7

FIG. 1

0210556

2/7

AUSKOPPELFLÄCHE T

TRANSMITTIERTE LICHTWELLE

GRENZFLÄCHE

RITZ

EINFALLENDE LICHTWELLE

BOHRLOCH

SUBSTRAT

REFLEKTIERTE LICHTWELLE

AUSKOPPELFLÄCHE R

EINKOPPELFLÄCHE

FIG. 2

FIG. 3a

4/7

FIG. 3b

AUSKOPPELFLÄCHE

TRANSMITTIERTE
LICHTWELLE 40%

BOHRLOCH

REFLEKTIERTE
LICHTWELLE 60%

GRENZFLÄCHE

51°

79°

A — — — — — — — — — — — — — — — A'

AUSKOPPELFLÄCHE R

RITZ

EINFALLENDE
LICHTWELLE

102°

EINKOPPELFLÄCHE

FIG. 4a

EINKOPPELFLÄCHE

BOHRLOCH

AUSKOPPELFLÄCHE R

WELLENLEITER

KLEBER

TRÄGERPLATTE

SUBSTRAT BK7

FIG. 4b

7/7

RITZ

40% TRANSMITTIERTER LICHTANTEIL

GRENZFLÄCHE

60% REFLEKTIERTER LICHTANTEIL

78°

57°

BOHRLOCH

WELLENLEITER

100%

EINKOPPELFLÄCHE

FIG. 5